# EUROPEAN PATENT APPLICATION

(11) **EP 4 782 316 A1**
(43) Date of publication of application: **29.07.2026**
(21) Application number: 26154042.1
(22) Date of filing: 26.01.2026
(51) Int. Cl.: B62K 23/02

(54) **HANDLE SWITCH DEVICE AND METHOD OF ASSEMBLING THE DEVICE TO HANDLEBAR**

(30) Priority: 28.01.2025 JP 2025012466
(71) Applicant: Asahi Denso Co., Ltd., Shizuoka 434-0046 (JP)
(72) Inventor: Sawaki, Yusuke, Hamamatsu City, Shizuoka, 434-0046 (JP)
(74) Representative: Grünecker Patent- und Rechtsanwälte PartG mbB

(57) **Abstract**

A handle switch device has a switch case fixed to a handlebar of a vehicle, a switch body attached to the switch case and including an operation switch, and a fixing member having a protrusion to be fitted into an opening portion formed at a predetermined position on the handlebar and fixing the switch case and the switch body to the handlebar. The switch body has an attachment portion in which a screw hole into which a tightening screw is screwed is formed. The fixing member is engaged with the attachment portion in a state where the protrusion is fitted into the opening portion. The fixing member is pressed against a periphery of the opening portion of the handlebar by a tightening force of the tightening screw with respect to the attachment portion to fix the switch case and the switch body to the handlebar.

## Description

### TECHNICAL FIELD

The present invention relates to a handle switch device in which a switch case and a switch body are to be fixed to a handlebar, and a method of assembling the handle switch device to the handlebar.

### BACKGROUND ART

In general, a handlebar is provided in a two-wheeled vehicle, an ATV, or the like for steering thereof. Holding grips to be held by a driver during traveling are attached to both end portions of the handlebar.
A handle switch device to which a plurality of operation switches for operating various electrical components mounted on the two-wheeled vehicle are attached is fixed at a position adjacent to the holding grips.
For example, a handle switch device in the related art is disclosed in JP2016-222238A.

In such a handle switch device in the related art, a pin (protrusion) of a fixed adapter (fixing member) is fitted into an opening portion formed at a predetermined position on a handlebar, and a control unit housing (switch case and switch body) is inserted around the handlebar from a tip portion of the handlebar and moved to a position (attachment position) of the fixed adapter, and is fixed to the handlebar by being locked by a latch formed in the fixed adapter.

However, since the handle switch device in the related art is fixed to the handlebar by being locked by the latch formed in the fixed adapter, a rattle generating between the handle switch device and the handlebar becomes large.
Further, in the handle switch device in the related art, a damper made of a rubber member or the like is required to suppress the rattle. Thus, a separate component for inhibiting generation of the rattle is required for the handle switch device in the related art.

### SUMMARY OF INVENTION

An object of the present invention is to provide a handle switch device and a method of assembling the handle switch device to a handlebar, which enable to reliably inhibit generation of a rattle between the handle switch device and the handlebar.
(1) A handle switch device having:
   a switch case fixed to a handlebar of a vehicle;
   a switch body attached to the switch case, and to which an operation switch for operating electrical components mounted on the vehicle is attached; and
   a fixing member having a protrusion to be fitted into an opening portion formed at a predetermined position on the handlebar, and fixing the switch case and the switch body to the handlebar, in which
   the switch body has an attachment portion in which a screw hole into which a tightening screw is screwed is formed,
   the fixing member is engaged with the attachment portion in a state where the protrusion is fitted into the opening portion, and
   the fixing member is pressed against a periphery of the opening portion of the handlebar by a tightening force of the tightening screw with respect to the attachment portion to fix the switch case and the switch body to the handlebar.
(2) The handle switch device according to (1), in which
   the fixing member is coupled to the attachment portion and pressed against the periphery of the opening portion of the handlebar by the tightening force of the tightening screw with respect to the attachment portion to fix the switch case and the switch body to the handlebar.
(3) The handle switch device according to (1), in which
   the fixing member has an insertion hole through which the tightening screw is allowed to be inserted, and
   a head portion of the tightening screw screwed into the screw hole of the attachment portion abuts against an opening edge portion of the insertion hole, such that the tightening force of the tightening screw is transmitted to the fixing member, and the fixing member is pressed against the periphery of the opening portion of the handlebar.
(4) The handle switch device according to any one of (1) to (3), in which
   the fixing member has an attachment surface formed in an arc shape along an outer peripheral surface of the handlebar, and
   the protrusion is formed on the attachment surface.
(5) The handle switch device according to (1), in which
   the fixing member has a receiving portion opened in an extension direction of the handlebar, and
   the fixing member receives the attachment portion from the receiving portion to be engaged with the attachment portion.
(6) The handle switch device according to (5), in which
   the fixing member is provided with a guide portion that guides the attachment portion in a process of receiving the attachment portion from the receiving portion.
(7) A method of assembling the handle switch device according to (1) to the handlebar, the method having:
   an attachment step of attaching the fixing member to an attachment position on the handlebar in a state where the protrusion is fitted into the opening portion of the handlebar;
   an engagement step of inserting the switch case to which the switch body is attached around the handlebar, and moving the switch case to the attachment position on the handlebar along the handlebar to engage the attachment portion with the fixing member; and
   a tightening step of generating the tightening force by screwing the tightening screw into the screw hole of the attachment portion, and pressing the fixing member against the periphery of the opening portion of the handlebar by the tightening force to fix the switch case and the switch body to the handlebar.

According to above-described (1), since the fixing member is pressed against the periphery of the opening portion of the handlebar by the tightening force of the tightening screw with respect to the attachment portion to fix the switch case and the switch body to the handlebar, it is possible to reliably inhibit generation of a rattle between the handle switch device and the handlebar.

According to the above-described (2), since the fixing member is coupled to the attachment portion and pressed the periphery of the opening portion of the handlebar by the tightening force of the tightening screw with respect to the attachment portion to fix the switch case and the switch body to the handlebar, the coupling of the fixing member to the attachment portion and the pressing of the fixing member to the handlebar can be performed together by the tightening force of the tightening screw.

According to the above-described (3), since the head portion of the tightening screw screwed into the screw hole of the attachment portion abuts against the opening edge portion of the insertion hole, the tightening force of the tightening screw is transmitted to the fixing member and the fixing member is pressed against the periphery of the opening portion of the handlebar, and thus it is possible to more reliably inhibit the generation of the rattle between the handle switch device and the handlebar using the tightening screw.

According to the above-described (4), since the fixing member has the attachment surface formed in an arc shape along the outer peripheral surface of the handlebar, and the protrusion is formed on the attachment surface, the fixing member can be stably attached to the outer peripheral surface of the handlebar, and the fixing member can be stably pressed against the periphery of the opening portion of the handlebar.

According to the above-described (5), since the fixing member has the receiving portion opened in the extension direction of the handlebar, and the fixing member receives the attachment portion from the receiving portion to be engaged with the attachment portion, it is possible to smoothly perform the engagement operation between the fixing member and the attachment portion.

According to the above-described (6), since the fixing member is provided with the guide portion that guides the fixing member in the process of receiving the attachment portion from the receiving portion, it is possible to more smoothly perform the engagement operation between the fixing member and the attachment portion.

According to the above-described (7), the tightening force is generated by screwing the tightening screw into the screw hole of the attachment portion, and the fixing member is pressed against the periphery of the opening portion of the handlebar by the tightening force, the switch case and switch body are fixed to the handlebar, and thus the tightening operation using the tightening screw can reliably inhibit the generation of the rattle between the handle switch device and the handlebar.

### BRIEF DESCRIPTION OF DRAWINGS

FIG. 1 is a perspective view showing an appearance of a handle switch device according to an embodiment of the present invention.
FIG. 2 is a three-side view showing the handle switch device.
FIG. 3 is a cross-sectional view taken along line III-III in FIG. 2.
FIG. 4 is a cross-sectional view taken along line IV-IV in FIG. 2.
FIG. 5 is a perspective view showing a fixing member, a switch case to which a switch body is attached, and a tightening screw in the handle switch device.
FIG. 6 is an exploded perspective view showing the fixing member, the switch body, the switch case, and the tightening screw in the handle switch device.
FIG. 7 is a two-side view showing the switch body (before the tightening screw and the fixing member are attached) in the handle switch device.
FIG. 8 is a two-side view showing the switch body (after the tightening screw and the fixing member are attached) in the handle switch device.
FIG. 9 is a perspective view showing the fixing member in the handle switch device.
FIG. 10 is a four-side view showing the fixing member in the handle switch device.
FIG. 11 is a schematic sectional view showing a method of coupling the fixing member to an attachment portion in the handle switch device, in which section (a) shows a state where the attachment portion is engaged with the fixing member, section (b) shows a state where the fixing member is coupled to the attachment portion by a tightening force of the tightening screw, and section (c) shows a state where the fixing member is pressed against a periphery of an opening portion of a handlebar by the tightening force of the tightening screw.
FIG. 12 is a perspective view showing a method of assembling the handle switch device to the handlebar, and is a perspective view showing a state before the fixing member is attached to the handlebar.
FIG. 13 is a perspective view showing the method of assembling the handle switch device to the handlebar, and is a perspective view showing a state where the fixing member is attached to the handlebar.
FIG. 14 is a perspective view showing the method of assembling the handle switch device to the handlebar, and is a perspective view showing a state where the switch case to which the switch body is attached is moved to an attachment position on the handlebar.
FIG. 15 is a perspective view showing the method of assembling the handle switch device to the handlebar, and is a perspective view showing a state where the tightening screw is screwed.
FIG. 16 is a schematic view showing a state where the handle switch device is attached to a two-wheeled vehicle.

### DESCRIPTION OF EMBODIMENTS

Hereinafter, an embodiment of the present invention will be specifically described with reference to the drawings.

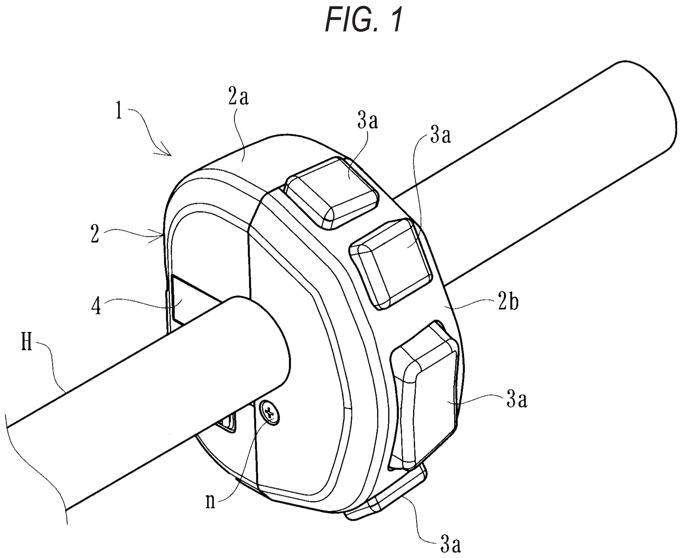

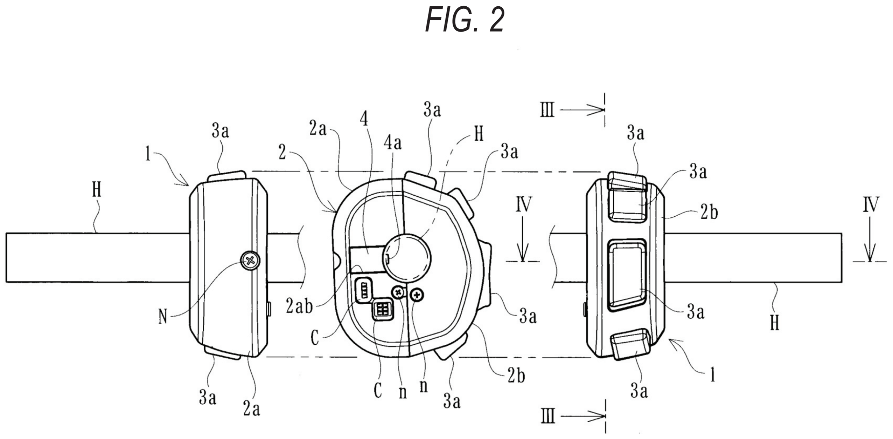

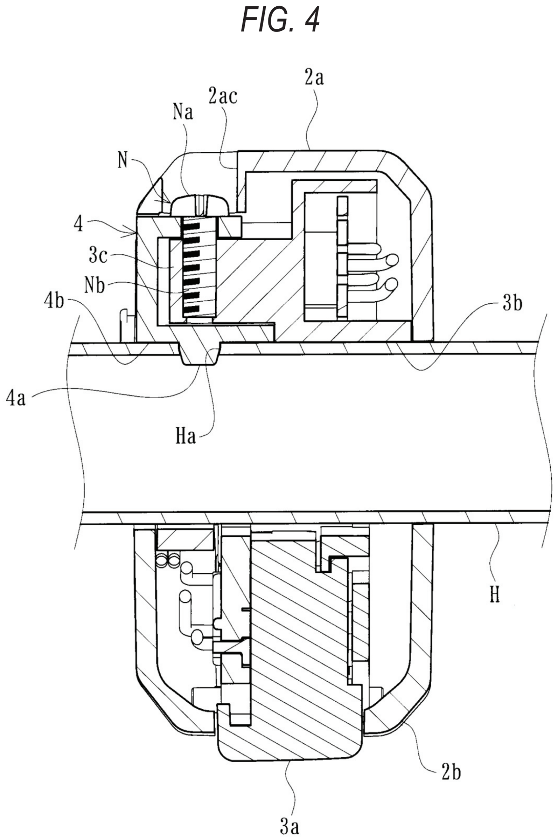

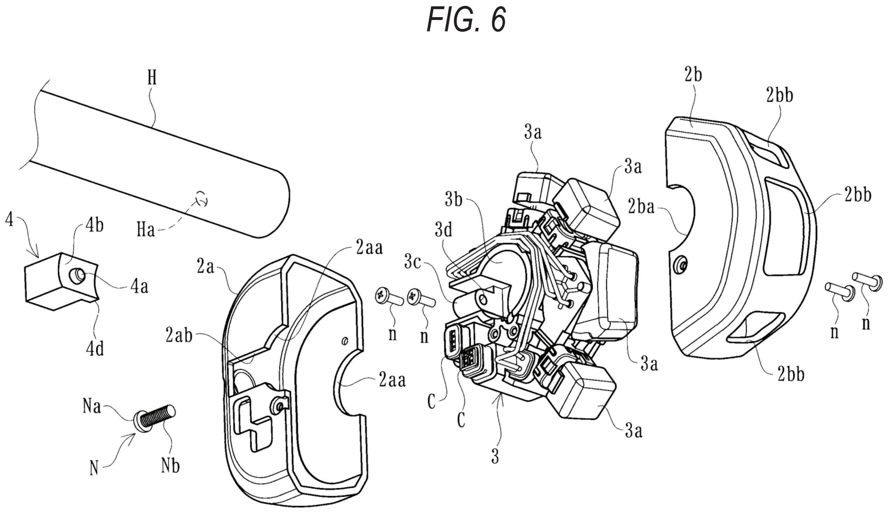

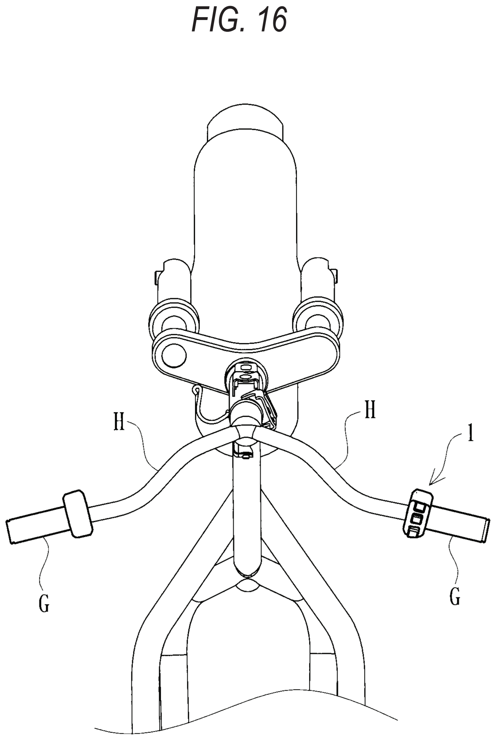

As shown in FIG. 16, a handle switch device 1 according to the present embodiment is attached to a tip portion (a position in the vicinity of a handle grip G) of a handlebar H included in a vehicle such as a two-wheeled vehicle, and includes a switch case 2, a switch body 3, and a fixing member 4 as shown in FIGs. 1 to 6.

The switch case 2 is fixed to a handlebar H of the two-wheeled vehicle, and as shown in FIGs. 1 to 4 and 6, the switch case 2 is configured by combining a first switch case 2a and a second switch case 2b having a half-split shape each. An arcuate notch portion 2aa and an arcuate notch portion 2ba are formed on mating surfaces of the first switch case 2a and the second switch case 2b, respectively. When the first switch case 2a and the second switch case 2b are combined with the handlebar H interposed therebetween, the arcuate notch portion 2aa and the arcuate notch portion 2ba abut along an outer peripheral surface of the handlebar H to sandwich the handlebar H.

The first switch case 2a is attached to the front side of the handlebar H (the side facing the front of the vehicle), and has an attachment opening portion 2ab through which the fixing member 4 is to be inserted and a screw opening portion 2ac through which a tightening screw N is to be inserted. The second switch case 2b is attached to the rear side of the handlebar H (the side facing the rear of the vehicle), and has a switch opening portion 2bb through which the plurality of operation switches 3a attached to the switch body 3 are inserted to enable an operation from the outside.

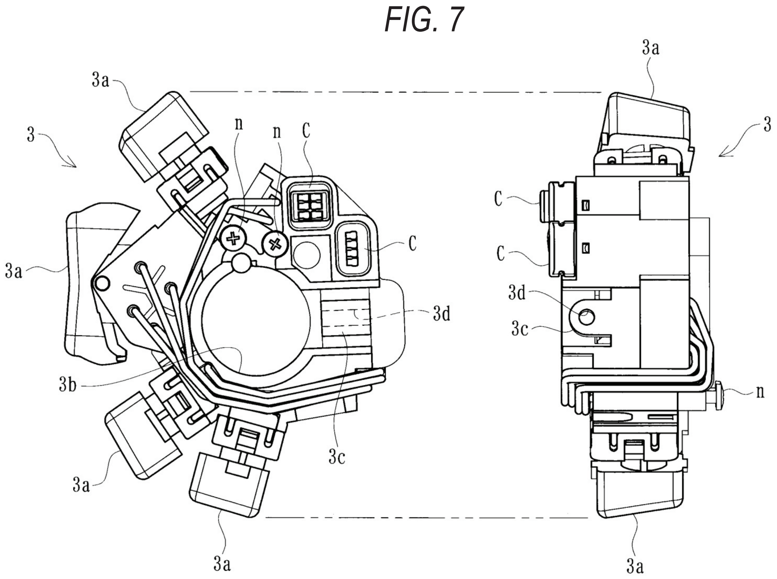

The switch body 3 is attached to the switch case 2, to which an operation switch 3a capable of operating various electrical components mounted on the two-wheeled vehicle is attached. As shown in FIG. 7, the switch body 3 has an insertion hole 3b through which a handlebar H is to be inserted, an attachment portion 3c in which a screw hole 3d is formed, and a connector C. In addition, the switch body 3 is fixed to the switch case 2 (the first switch case 2a and the second switch case 2b) by assembly screws n, whereby the switch body 3 and the switch case 2 are integrally combined.

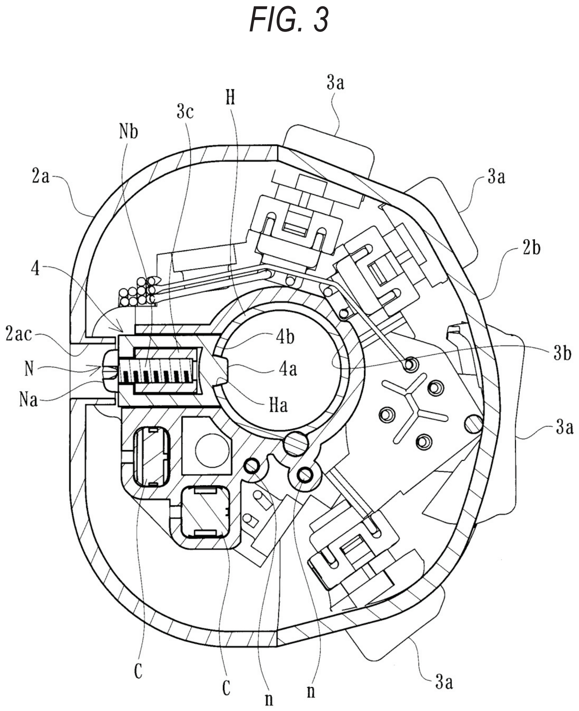

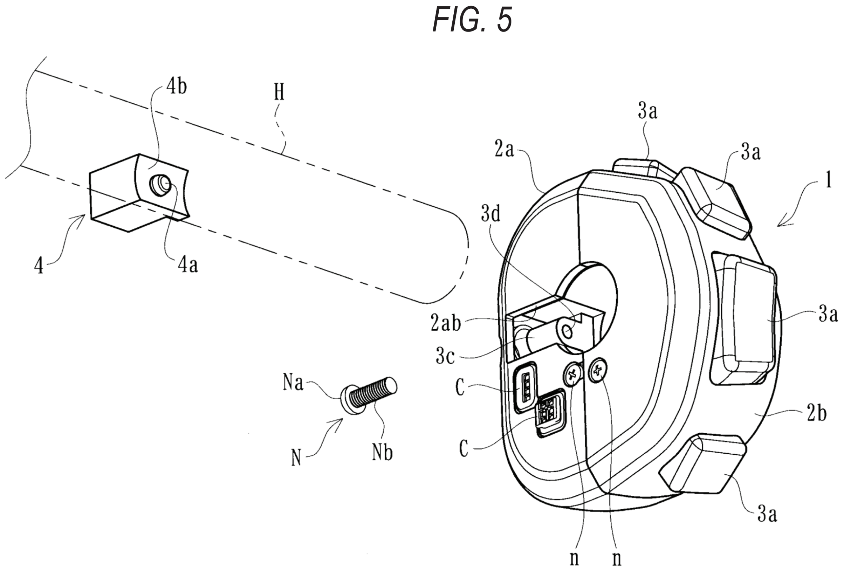

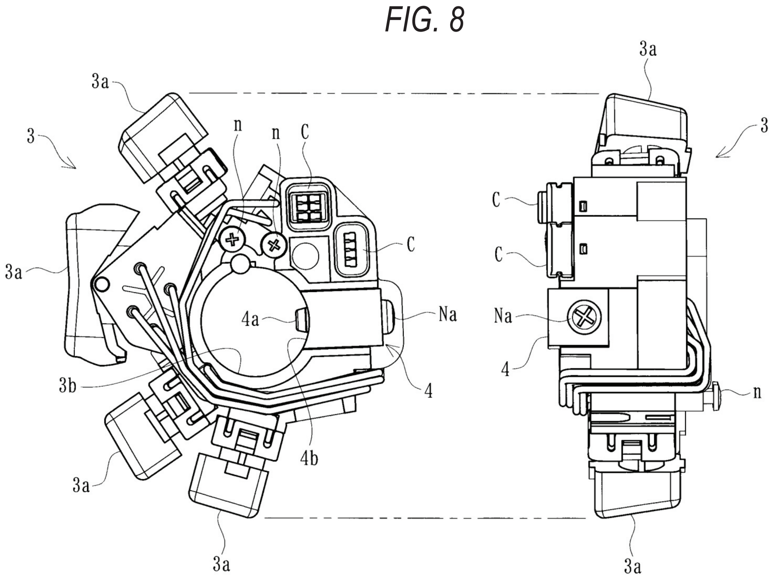

As shown in FIG. 7, the attachment portion 3c includes a portion integrally formed at a predetermined position in the switch body 3. As shown in FIGs. 5, 12 and 13, the attachment portion 3c is configured to face the fixing member 4 via the attachment opening portion 2ab of the switch case 2 in a state before the switch case 2 and the switch body 3, which are integrally combined, are inserted around the handlebar H. Then, when the switch case 2 and switch body 3, which are integrally combined, are inserted around the handlebar H, the attachment portion 3c is allowed to be engaged with the fixing member 4 attached to the attachment position on the handlebar H, as shown in FIGs. 3, 4 and 8.

In addition, the attachment portion 3c has the screw hole 3d in which the female screw shape to be screwed with the male screw shape of the tightening screw N is formed on the inner peripheral surface. The tightening screw N can be screwed into the attachment portion 3c. The tightening screw N has a head portion Na rotatable by a tool such as a screwdriver, and a shaft portion Nb integrally formed in a shaft shape from the head portion Na, and a male screw shape formed on the outer peripheral surface of the shaft portion Nb can be screwed into the female screw shape of the screw hole 3d of the attachment portion 3c.

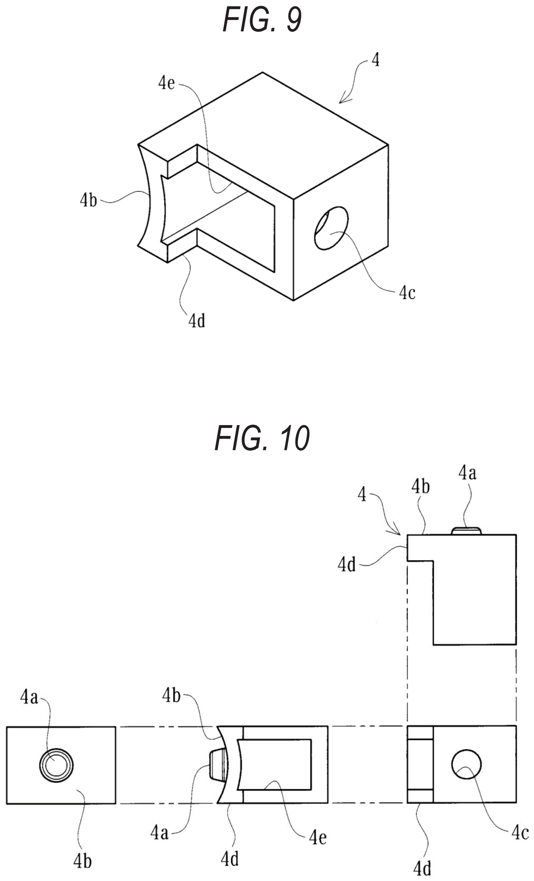

The fixing member 4 according to the present embodiment has a protrusion 4a to be fitted into an opening portion Ha formed at a predetermined position on the handlebar H. The fixing member 4 fixes the switch case 2 and the switch body 3, which are integrally combined, to the handlebar H. As shown in FIGs. 9 and 10, the fixing member 4 has the protrusion 4a to be fitted into the opening portion Ha of the handlebar H, an attachment surface 4b on which the protrusion 4a is formed, an insertion hole 4c through which the tightening screw N is allowed to be inserted, a guide portion 4d formed in a stepped shape, and a receiving portion 4e opened to the side.

The attachment surface 4b is a surface formed in an arc shape along the outer peripheral surface of the handlebar H. The protrusion 4a is formed to protrude at a predetermined position on the attachment surface 4b. Accordingly, when the fixing member 4 is engaged with the attachment portion 3c in a state where the protrusion 4a is fitted into the opening portion Ha of the handlebar H, the attachment surface 4b abuts along the outer peripheral surface of the handlebar H (specifically, the peripheral portion of the opening portion Ha) as shown in FIG. 3.

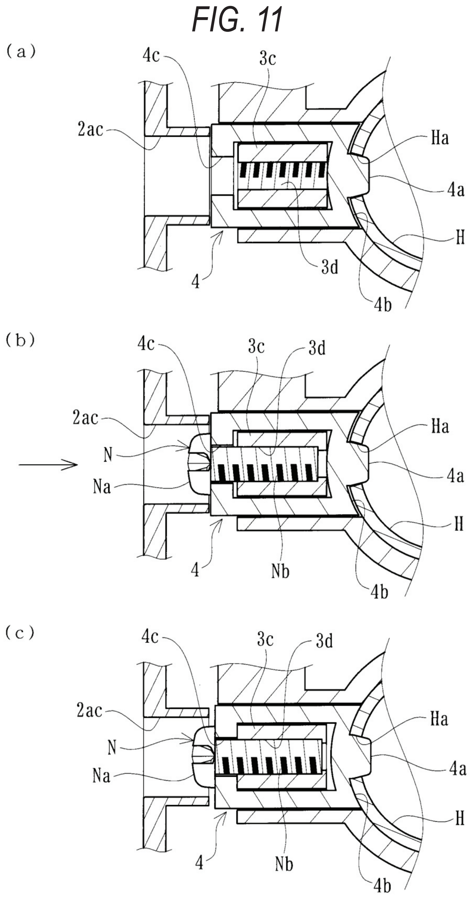

The insertion hole 4c is formed of a through hole having a diameter larger than the diameter of the shaft portion Nb of the tightening screw N and smaller than the diameter of the head portion Na of the tightening screw N. As shown in FIG. 11, the head portion Na of the tightening screw N screwed into the screw hole 3d of the attachment portion 3c abuts against the opening edge portion of the insertion hole 4c. Specifically, when the fixing member 4 is locked to the attachment portion 3c, as shown at section (a) in FIG. 11, the insertion hole 4c of the fixing member 4 is in a state of facing the outside through the screw opening portion 2ac, and is in a state of communicating the insertion hole 4c of the fixing member 4 and the screw hole 3d of the attachment portion 3c each other.

Then, when the tightening screw N is inserted from the screw opening portion 2ac, and the tightening screw N is screwed into the screw hole 3d, as shown at section (b) in FIG. 11, the head portion Na of the tightening screw N abuts against the opening edge portion of the insertion hole 4c. Thus, the fixing member 4 is coupled to the attachment portion 3c by the tightening force of the tightening screw N with respect to the attachment portion 3c. As the result, the switch case 2 and the switch body 3, which are integrally combined, are coupled (fastened) by the tightening screw N via the fixing member 4.

Thereafter, when the tightening screw N is further screwed, as shown at section (c) in FIG. 11, a further tightening force of the tightening screw N with respect to the attachment portion 3c is transmitted to the fixing member 4. Thus, the fixing member 4 is pressed against the periphery of the opening portion Ha of the handlebar H. Accordingly, in the state where the switch case 2 and the switch body 3 which are integrally combined are coupled (fastened) by the tightening screw N via the fixing member 4, a pressing force by the fixing member 4 can be generated, and thus it is possible to inhibit generation of a rattle between the handlebar H, and the switch case 2 and the switch body 3.

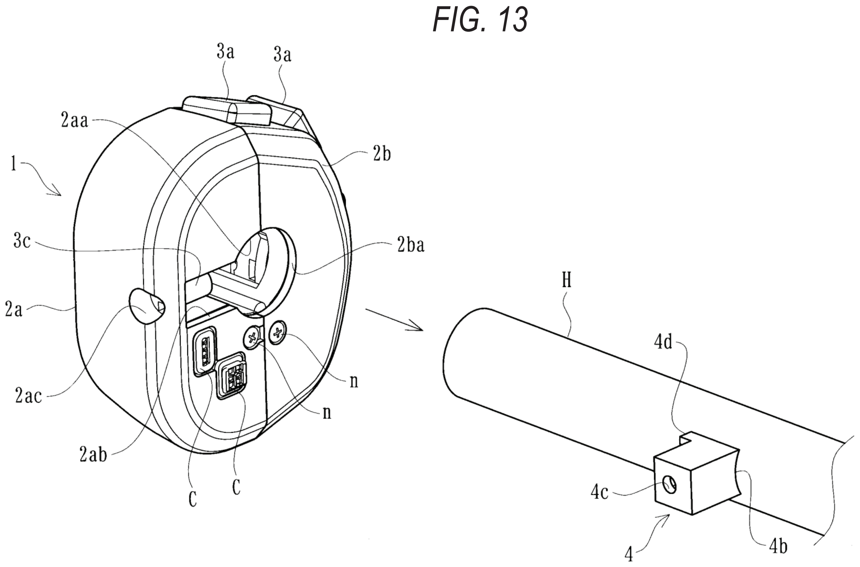

The receiving portion 4e is formed of a portion opened in the extension direction of the handlebar H (opened toward the side of the fixing member 4), and is formed continuously with the guide portion 4d to protrude to the side of the fixing member 4. Then, as shown in FIG. 13, in the state where the fixing member 4 is attached to the attachment position on the handlebar H, the switch case 2 and the switch body 3, which are integrally combined, are inserted around the handlebar H from the tip of the handlebar H and moved to the attachment position on the handlebar H, so that the attachment portion 3c can be received from the receiving portion 4e to be engaged with the fixing member 4.

In addition, in the state where the fixing member 4 is attached to the attachment position on the handlebar H, when the switch case 2 and the switch body 3, which are integrally combined, are inserted around the handlebar H from the tip of the handlebar H and moved to the attachment position on the handlebar H, the attachment portion 3c is guided by the guide portion 4d in a process of receiving the attachment portion 3c from the receiving portion 4e. Thus, the attachment portion 3c can be accurately received from the receiving portion 4e.

Next, a method of assembling the handle switch device 1 to the handlebar H according to the present embodiment will be described.

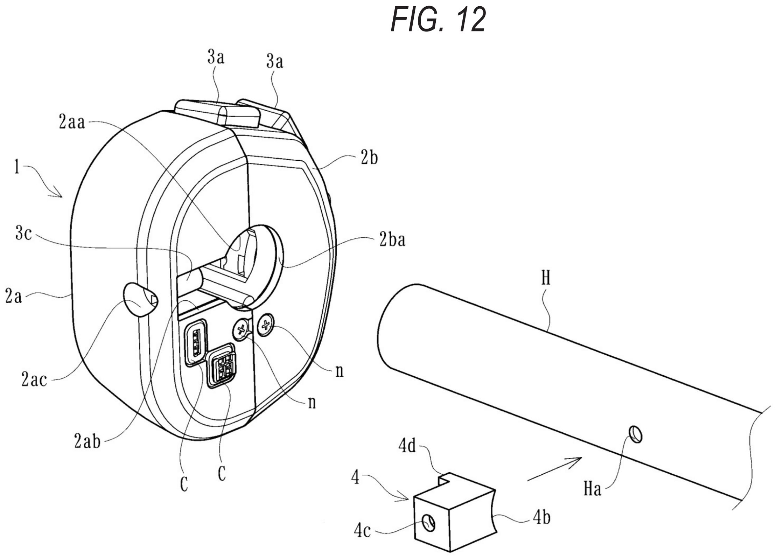

First, as shown in FIG. 12, the fixing member 4 is attached to the attachment position on the handlebar H in the state where the protrusion 4a is fitted into the opening portion Ha of the handlebar H (attachment step). Then, as shown in FIG. 13, the switch case 2 to which the switch body 3 is attached (the switch case 2 and the switch body 3 which are integrally combined) is inserted around the handlebar H from the tip of the handlebar H, and the switch case 2 is moved to the attachment position on the handlebar H along the handlebar H, whereby the attachment portion 3c is engaged with the fixing member 4 (engagement step).

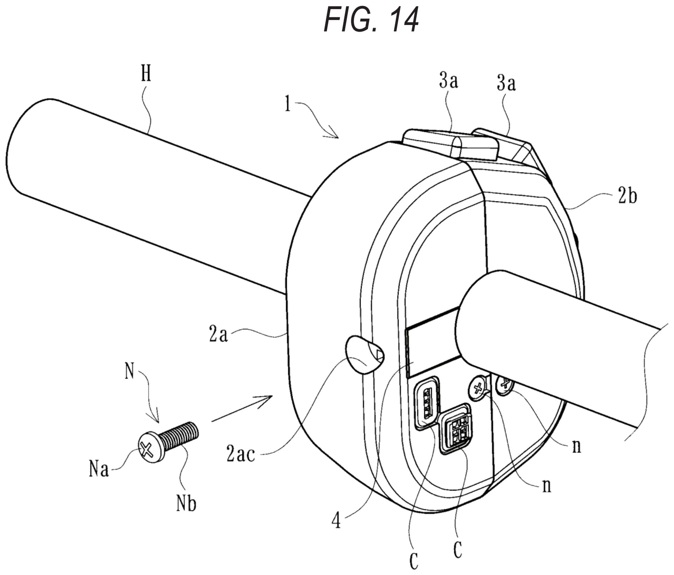

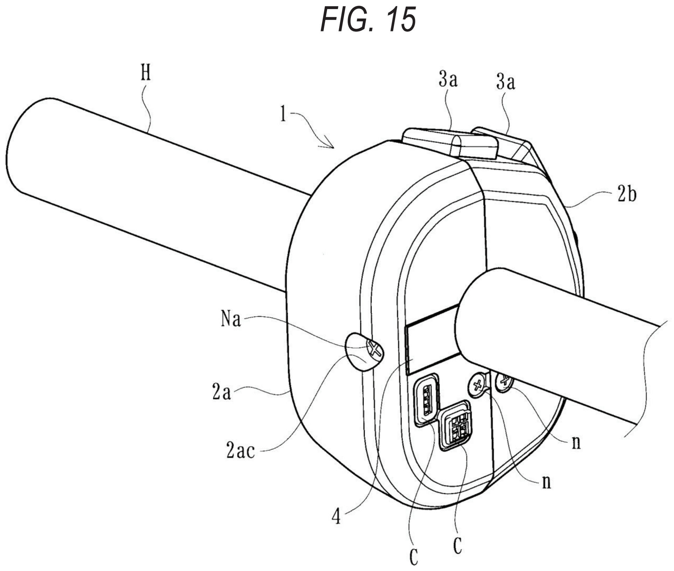

Thereafter, as shown in FIG. 14, the tightening screw N is inserted through the screw opening portion 2ac, and as shown in FIG. 15, the tightening screw N is screwed into the screw hole 3d of the attachment portion 3c and tightened (tightening step). In the tightening step, the tightening force is generated by screwing the tightening screw N into the screw hole 3d of the attachment portion 3c, the fixing member 4 is coupled (fastened) to the attachment portion 3c by the tightening force, and the fixing member 4 is pressed against the periphery of the opening portion Ha of the handlebar H, so that the switch case 2 and the switch body 3, which are integrally combined, can be fixed to the handlebar H.

According to the handle switch device 1 of the present embodiment, since the fixing member 4 is pressed against the periphery of the opening portion Ha of the handlebar H by the tightening force of the tightening screw N with respect to the attachment portion 3c to fix the switch case 2 and the switch body 3 to the handlebar H, it is possible to reliably inhibit generation of a rattle between the handle switch device 1 and the handlebar H.

In addition, since the fixing member 4 according to the present embodiment is coupled to the attachment portion 3c and pressed against the periphery of the opening portion Ha of the handlebar H by the tightening force of the tightening screw N with respect to the attachment portion 3c to fix the switch case 2 and the switch body 3 to the handlebar H, the coupling (fastening) of the fixing member 4 to the attachment portion 3c and the pressing of the fixing member 4 to the handlebar H can be performed together by the tightening force of the tightening screw N.

Further, according to the handle switch device 1 of the present embodiment, since the head portion Na of the tightening screw N screwed into the screw hole 3d of the attachment portion 3c abuts against the opening edge portion of the insertion hole 4c, the tightening force of the tightening screw N is transmitted to the fixing member 4, and the fixing member 4 is pressed against the periphery of the opening portion Ha of the handlebar H, and thus it is possible to more reliably inhibit generation of a rattle between the handle switch device 1 and the handlebar H using the tightening screw N.

Furthermore, since the fixing member 4 according to the present embodiment has the attachment surface 4b formed in the arc shape along the outer peripheral surface of the handlebar H, and the protrusion 4a is formed on the attachment surface 4b, the fixing member 4 can be stably attached to the outer peripheral surface of the handlebar H, and the fixing member 4 can be stably pressed against the periphery of the opening portion Ha of the handlebar H.

In addition, since the fixing member 4 according to the present embodiment has the receiving portion 4e opened in the extension direction of the handlebar H and can receive the attachment portion 3c from the receiving portion 4e to be engaged with the attachment portion 3c, it is possible to smoothly perform the engagement operation between the fixing member 4 and the attachment portion 3c. In addition, in the fixing member 4 according to the present embodiment, since the guide portion 4d for guiding the attachment portion 3c in the process of receiving the attachment portion 3c from the receiving portion 4e is formed, it is possible to more smoothly perform the engagement operation between the fixing member 4 and the attachment portion 3c.

Further, according to the handle switch device 1 of the present embodiment, since the tightening force is generated by screwing the tightening screw N into the screw hole 3d of the attachment portion 3c, and the fixing member 4 is pressed against the periphery of the opening portion Ha of the handlebar H by the tightening force to fix the switch case 2 and the switch body 3 to the handlebar H, it is possible to reliably inhibit generation of a rattle between the handle switch device 1 and the handlebar H by the tightening operation using the tightening screw N.

Although the present embodiment has been described above, the present invention is not limited thereto. For example, the switch case 2 is not limited to a combination of a pair of half-split components (the first switch case 2a and the second switch case 2b), and may be applied to an integrally configured member or a combination of three or more components. In addition, although the handle switch device 1 according to the present embodiment is applied to the two-wheeled vehicle, the handle switch device 1 may be applied to a vehicle of another form including a handlebar such as an ATV, or may be applied to a vehicle driven by an engine, a vehicle driven by a motor, or the like.

As long as the purpose is similar to that of the present invention, the present invention can be applied to devices having a different external shape or having other functions added.

## Claims

1. A handle switch device comprising:
a switch case fixed to a handlebar of a vehicle;
a switch body attached to the switch case, and to which an operation switch for operating electrical components mounted on the vehicle is attached; and
a fixing member having a protrusion to be fitted into an opening portion formed at a predetermined position on the handlebar, and fixing the switch case and the switch body to the handlebar, wherein
the switch body has an attachment portion in which a screw hole into which a tightening screw is screwed is formed,
the fixing member is engaged with the attachment portion in a state where the protrusion is fitted into the opening portion, and
the fixing member is pressed against a periphery of the opening portion of the handlebar by a tightening force of the tightening screw with respect to the attachment portion to fix the switch case and the switch body to the handlebar.

2. The handle switch device according to claim 1, wherein
the fixing member is coupled to the attachment portion and pressed against the periphery of the opening portion of the handlebar by the tightening force of the tightening screw with respect to the attachment portion to fix the switch case and the switch body to the handlebar.

3. The handle switch device according to claim 1, wherein
the fixing member has an insertion hole through which the tightening screw is allowed to be inserted, and
a head portion of the tightening screw screwed into the screw hole of the attachment portion abuts against an opening edge portion of the insertion hole, such that the tightening force of the tightening screw is transmitted to the fixing member, and the fixing member is pressed against the periphery of the opening portion of the handlebar.

4. The handle switch device according to any one of claims 1 to 3, wherein
the fixing member has an attachment surface formed in an arc shape along an outer peripheral surface of the handlebar, and
the protrusion is formed on the attachment surface.

5. The handle switch device according to claim 1, wherein
the fixing member has a receiving portion opened in an extension direction of the handlebar, and
the fixing member receives the attachment portion from the receiving portion to be engaged with the attachment portion.

6. The handle switch device according to claim 5, wherein
the fixing member is provided with a guide portion that guides the attachment portion in a process of receiving the attachment portion from the receiving portion.

7. A method of assembling the handle switch device according to claim 1 to the handlebar, the method comprising:
an attachment step of attaching the fixing member to an attachment position on the handlebar in a state where the protrusion is fitted into the opening portion of the handlebar;
an engagement step of inserting the switch case to which the switch body is attached around the handlebar, and moving the switch case to the attachment position on the handlebar along the handlebar to engage the attachment portion with the fixing member; and
a tightening step of generating the tightening force by screwing the tightening screw into the screw hole of the attachment portion, and pressing the fixing member against the periphery of the opening portion of the handlebar by the tightening force to fix the switch case and the switch body to the handlebar.
